(19) Europäisches Patentamt

European Patent Office

Office européen des brevets

(11) **EP 0 867 760 A1**

(12) **EUROPEAN PATENT APPLICATION**

(43) Date of publication:
30.09.1998 Bulletin 1998/40

(51) Int. Cl.$^6$: **G03B 37/00**

(21) Application number: **97301991.2**

(22) Date of filing: **24.03.1997**

(84) Designated Contracting States:
**BE DE FR GB IT**

(71) Applicant:
**Kabushikigaisya Goto Kogaku Kenkyujyo
Fucyu-Shi, Tokyo (JP)**

(72) Inventor: **Goto, Ryuichiro
Setagaya-ku, Tokyo (JP)**

(74) Representative: **Whalley, Kevin
MARKS & CLERK,
57-60 Lincoln's Inn Fields
London WC2A 3LS (GB)**

(54) **Method of projecting video image onto domed surface**

(57)     Disclosed is a method of projecting an image onto a surface of a dome by means of a projector located at a position other than the center of the dome inside said dome. The method comprises the steps of assuming a projected image obtained when the same image is projected by the projector located at the center of the dome; and deforming the image to be projected so that a projected image obtained by use of the projector located at the position other than the center of the dome is coincident with the assumed projected image.

FIG. 1

Find positions ( xd , yd , zd ) to be projected on dome from focal length of imaging optical system, radius of dome, and coordinates of point on image.
S1

Transform into coordinate system having origin corresponding to position at which projector is located.
S2

Figure out angle of rotation so that coordinate system having origin corresponding to position at which projector is located is directed to center of projection image, and rotate coordinate system
S3

Transform obtained coordinates into two-dimensional coordinates in focal length of projection optical system.
S4

Figure out amount of variation ( percentage ) from obtained values.
S5

Regulate horizontal and vertical scanning voltages of projector in accordance with amount of variation.
S6

EP 0 867 760 A1

## Description

The present invention relates to a method of projecting a video image onto a dome-shaped projected surface (hereinafter, referred to simply as a domed surface).

Video projectors have widely spread which include for example LCD's and CRT's for displaying images on image planes by means of electrical signals and projecting them onto projected planes by way of optical systems. These projectors are often used in image projection facilities having spherical domed ceilings such as for example planetariums.

By the way, if a field angle at the time of image forming of an object is equal to a projection field angle of a projector, the very same and correct image as obtained when image formed will be reproduced for the viewers as long as the projected image is viewed from the same point as the projection point.

It is however theoretically impossible to make the projection point coincide with the viewing point.

It is also common to use different lenses as the image forming lens and the projection lens, and the projection field angles of the two lenses are not equal to each other. In such circumstances, any correct image will be by no means reproduced even though the projected image is viewed from the same point. The same applies to the domed surface.

In this case, if the projector is positioned at the center of the dome, all the viewers will be able to view images having the least distortion. In fact, however, due to the placement of other more essential projectors (fixed stars projectors in the case of the planetariums), the arrangement of viewer's seats and environmental requirements for disposing the projectors, it was impossible to place the projector such an position and hence the projector was actually placed at a position offset from the center of the dome.

Providing that the projector is disposed at an off-centered position inside the dome, the actual object to be imaged and the projected image are not allowed to be similar in shape to each other. Thus, any correct images are not reproduced.

For this reason, the projection angles are so narrowed as to be able to project small images enough to inhibit the deformation from becoming conspicuous. or alternatively large images are projected intactly with complete disregard for the deformation itself. However, due to the narrower field angles for the former and due to large deformation for the latter, it was difficult to reproduce a realistic feeling which the images will intrinsically possess.

In the assumption of projecting a single image on the domed surface in cooperation by means of a plurality of projectors, ideal placement of the projectors would result in a concentrated placement of the projectors at the center of the dome, which was too unrealistic to implement.

The present invention was conceived with the aim of overcoming the above problems. The present invention provides a method of projecting an image onto a surface of a dome by means of a projector located at a position other than the center of the dome inside said dome. The method comprises the steps of assuming a projected image obtained when_the same image is projected by the projector located at the center of the dome; and deforming the image to be projected so that a projected image obtained by use of the projector located at the position other than the center of the dome is coincident with the assumed projected image.

According to the aspect of the present invention there is achieved an operative function ensuring the acquisition of a projected image similar in configuration to the actual object to be projected irrespective of the position of the projector.

The above and other objects, aspects, features and advantages of the present invention will become more apparent from the following description with reference to the accompanying drawings, in which:

Fig. 1 is a flow chart of an embodiment of the present invention;
Fig. 2 is a block diagram of the same;
Fig. 3 is a diagram for explaining processing performed in the embodiment of the present invention;
Fig. 4 is a diagram for explaining processing performed in the same;
Fig. 5 is a diagram for explaining processing performed in the same; and
Fig. 6 is a diagram for explaining processing performed in the same.

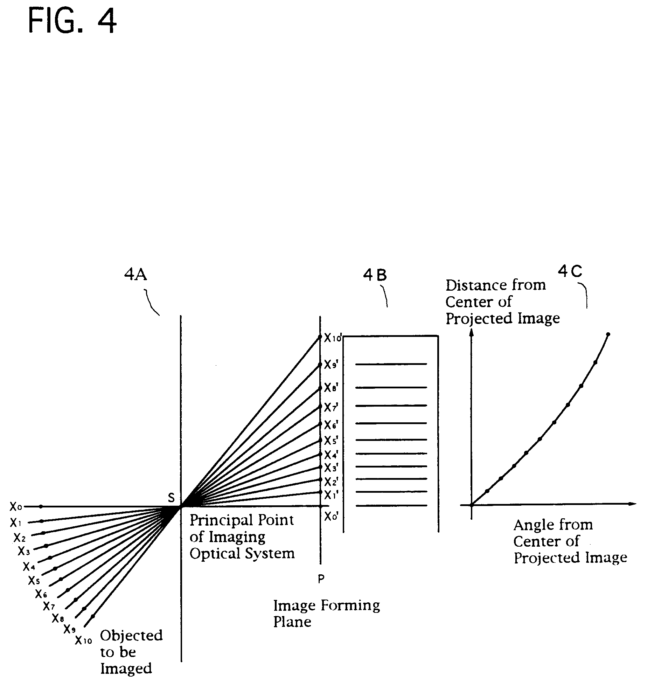

4A to 4C of Fig.4 are explanatory views illustrating a relationship between an object to be imaged and an image forming plane in an imaging optical system for forming an image to be projected.

In the case of obtaining a projected image by use of a normal process, as shown in 4A of Fig. 4, rays of light from object points X0 to X10 to be imaged selected at equiangular intervals pass through the principal point S in the imaging optical system and then are focused as image points X0' to X10' on the image forming plane P.

In this case, as shown in 4B and 4C of Fig. 4, the image points are not formed at equidistant intervals, and larger angles are required for unit length in the vicinity of the image center whereas the angles for unit length become smaller accordingly as the image points go away from the image center.

When the thus obtained image is projected from the center of a domed surface, rays of light from the image points follow reverse paths to those in the process of the image formation so that the image points are reproduced and projected as an equiangular image on the domed surface, thereby effecting a faithful reproduction of configurations of the object.

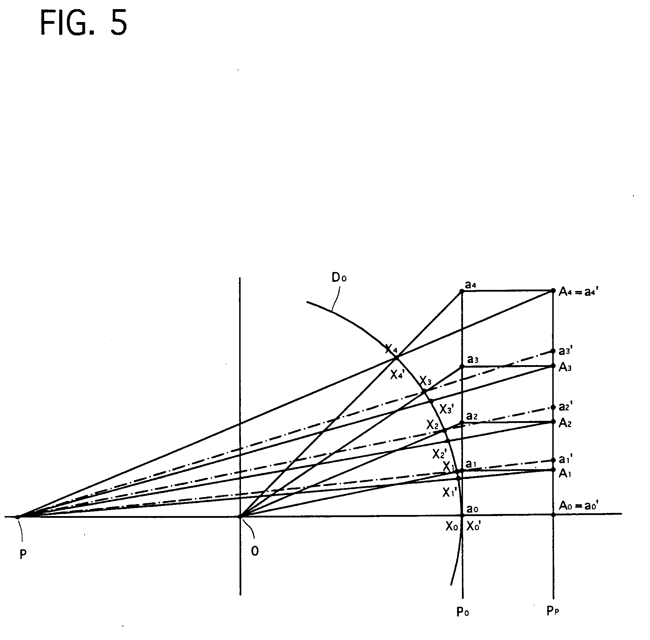

Fig. 5 is an explanatory view showing an image projected onto a domed surface by means of a video projector.

It is now assumed as shown in this diagram that image points a0 to a4 projected by a projector O located at the center of a dome fall as image points X0 to X4 on a domed surface Do by way of the optical system of the projector. In this case, when image points A0 to A4 coincident with the image points a0 to a4 are projected onto a planar imaging surface Pp by a projector P lying at an arbitrary position, there is formed on the domed surface Do an image consisting of image points Xo' to X4' which are intersections between the domed surface Dp and lines joining the projector P and the respective image points A0 to A4. The resultant image will thus differ from the image obtained when projected from the center of the dome.

This means that the same image will be reproduced on the dome surface Do as that obtained when projected from the center of the dome in spite of the projection from the position of the projector P, if the image points A0 to A4 are transformed so as to result in intersections a0' and a4', respectively, between the plane Pp and lines (indicated by dotted lines) joining the projector P and the image points X0 to X4 projected from the projector O placed at the center of the dome.

It is to be noted in this diagram that the image forming plane Po associated with the projector O is different in position from the image forming plane Pp in order to merely equalize in dimensions projected image planes of the projector.

Although in the above description an image to be projected is so deformed that a projection image derived from the projector lying at an arbitrary position coincides with a projection image which would be obtained if the same image was projected from the center of the dome, it is to be appreciated that the present invention effects this deformation by modulating a waveform of horizontal scanning and vertical scanning voltage of a video image signal from the projector.

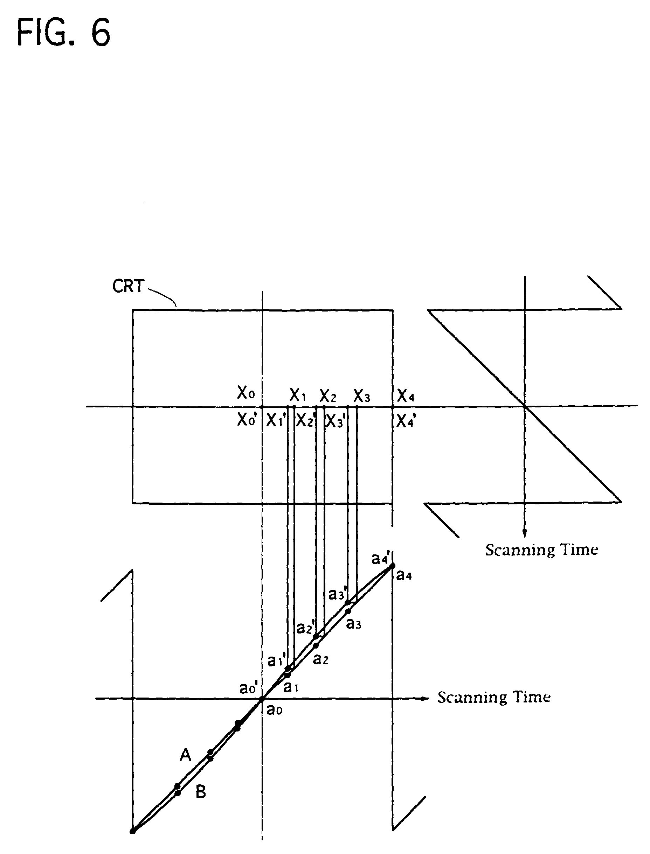

Fig. 6 is an explanatory view illustrating a relationship between the horizontal and vertical scanning voltage waveform of the video projector and an image displayed on a CRT.

In the case where the vertical and horizontal scanning voltage on the CRT located at the projected image plane is generally represented as a sawtooth waveform A, the image points a0 to a4 previously shown in Fig. 5 correspond to points a0 to a4 lying on the scanning voltage waveform A.

By way of example, a projector is assumedly located on a line joining the center of a projection image and the center of the dome. If the CRT is driven by use of a waveform B carrying thereon points a0' to a4' corresponding to the points a0 to a4 on the scanning voltage waveform A, then locations X0 to X4 displayed on the CRT will be transferred to locations X1' to X4' on the CRT, thereby obviously enabling the same image as that in the case of projection from the center of the dome to be projected from the position at which the projector is disposed.

The present inventor provides the following means (1) to (3) as the means for deforming the image to be projected.

(1)

Prior to input into the projector, image signals are temporarily fetched into an image processing unit for transform into an image array.

Due to their operability through rows and columns, elements in the image array are transformed into desired locations by means of a transform table for rows and columns.

The thus obtained image array is again transformed into image signals, which in turn are projected by the projector, thereby enabling the same image as that in the case of projection from the center of the dome to be projected from the position at which the projector is disposed.

(2)

The image signals are temporarily stored in the order of time series and the reproducing timing is regulated to thereby deform them into a desired configuration.

(3)

A projector having a desired image distortion is prepared for a projecting optical system of the display unit.

It is to be noted that the means of the above (1) and (2) still involve a problem that the unit becomes complicate and expensive to meet a multiplicity of image signal standards since different hardware will be required depending on the type of image signals used.

The means of the above (3) also still involve a problem that it would be difficult to move the projector to any arbitrary positions since the required optical system is inconveniently fixed depending on the position at which the projector is disposed.

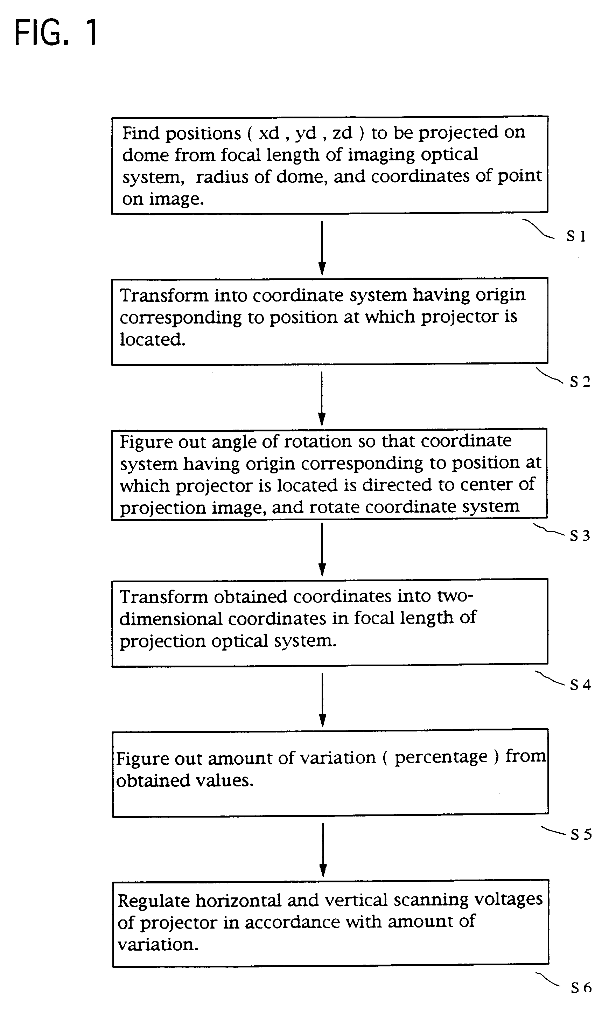

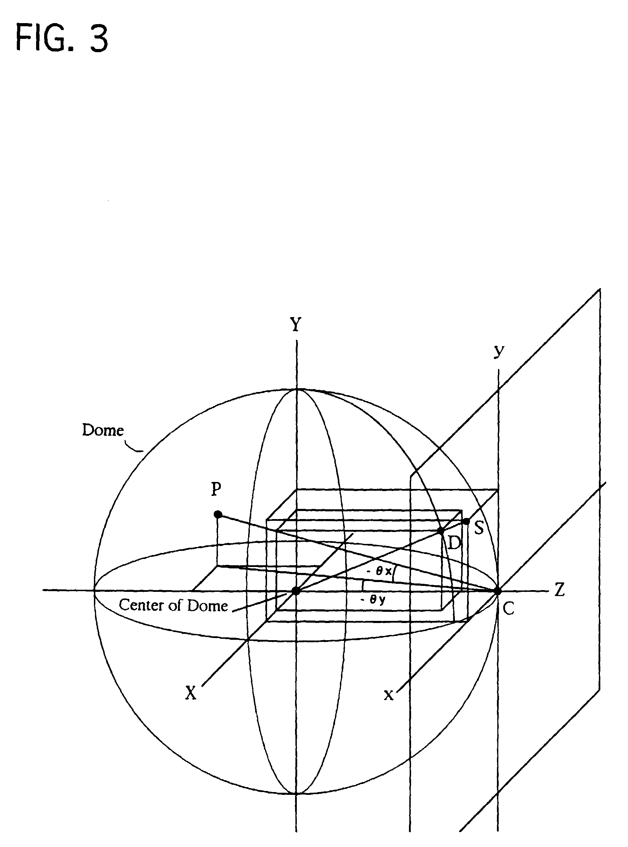

Fig. 1 is a flow chart illustrating steps for carrying out the present invention, and Fig. 3 is an explanatory view illustrating an image projected on a domed surface by a video projector for explaining these steps.

The steps will now be specifically described with reference to the flow chart and the explanatory view.

(Step S1)

A projection image is assumed which is obtained when projecting an image to be projected from the center of the dome.

When an arbitrary point S on a projection image is now represented as two-dimensional coordinates (x, y) with the original point corresponding to the center of the projection image, if the projection image is projected from a point C having three-dimensional coordinates (0, 0, r) with the origin corresponding to the center of the dome, then coordinates (xd, yd, zd) of a point D into which the point S on the projection image is projected on the domed surface are given as (f is a focal length of an imaging lens; and r is the radius of the dome):

$$k = \frac{r}{f}$$

$$x_1 = k \cdot x$$

$$y_1 = k \cdot y$$

$$R = \sqrt{x_1^2 + y_1^2 + r^2}$$

$$m = \frac{r}{R}$$

$$x_d = m \cdot x_1$$

$$y_d = m \cdot y_1$$

$$z_d = m \cdot r$$

(Step S2)

If this point D is represented in coordinates with the origin corresponding to a point P ($x_p$, $y_p$, $z_p$) at which the projector is actually disposed, the coordinates ($x'_d$, $y'_d$, $z'_d$) are written as:

$$x'_d = x_d - x_p$$

$$y'_d = y_d - y_p$$

$$z'_d = z_d - z_p$$

(Step S3)

Angles of rotation of the axes X, Y and Z for allowing the Z-axis to pass through the point C are expressed as:

$$\theta_x = -\tan^{-1} \left( \frac{y_p}{\sqrt{x_p^2 + (r - z_p)^2}} \right)$$

$$\theta_y = -\tan^{-1} \left( \frac{-x_p}{r - z_p} \right)$$

$$\theta_z = 0$$

The coordinates (Xd, Yd, Zd) obtained as a result of rotation are expressed as:

$$X_d = \cos(\theta_y) \cdot x'_d + \sin(\theta_x) \cdot \sin(\theta_y) \cdot y'_d + \cos(\theta_x) \cdot \sin(\theta_y) \cdot z'_d$$

$$Y_d = \cos(\theta_x) \cdot y'_d - \sin(\theta_x) \cdot z'_d$$

$$Z_d = -\sin(\theta_y) \cdot x'_d + \sin(\theta_x) \cdot \cos(\theta_y) \cdot y'_d + \cos(\theta_x) \cdot \cos(\theta_y) \cdot z'_d$$

Transforming into the two-dimensional coordinates (X, Y) would result in:

$$X = f_P \frac{X_d}{Z_d} \qquad Y = f_P \frac{Y_d}{Z_d}$$

where fp is a focal length of the projecting optical system of the projector positioned at the point P.

(Step S5)

Adjustable points of the projector are subjected to the following adjustment.
From the projector position there are found points (X, Y) into which the points (x, y) on the image are transformed.

$$d_x = 1 - \frac{X}{x}$$

$$d_y = 1 - \frac{Y}{y}$$

From the thus obtained values, the amount of adjustment (percentage) is determined.

(Step S6)

The horizontal and vertical scanning voltages of the projector are regulated into the thus found values.
In other words, this will allow the two-dimensional coordinates (x, y) to be transferred to X and Y.

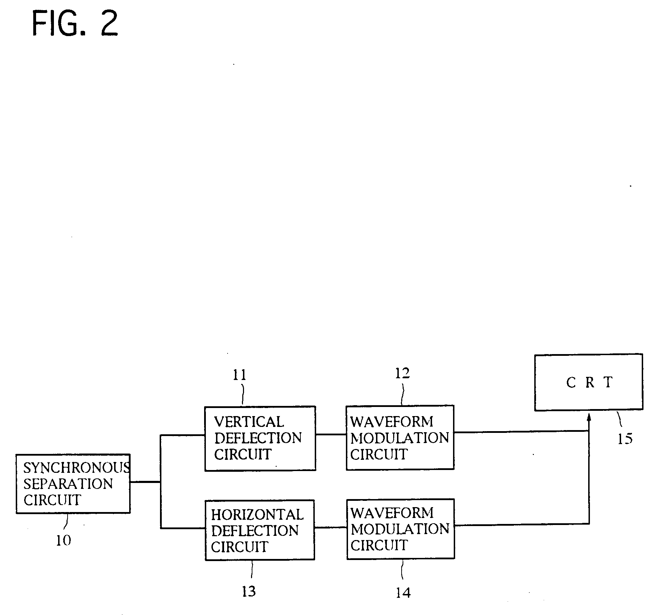

Fig. 2 is a block diagram of a scanning circuit area of the video projector for carrying out the above steps.
Signals derived from medium such as, e.g., a video tape enter a synchronous separation circuit 10 and, after separation into vertical and horizontal components, are fed respectively into the vertical deflection circuit 11 and the horizontal deflection circuit 13.
Waveform modulation circuits 12 and 14 for carrying out the present invention are interposed between the vertical 11 and horizontal 13 deflection circuits and a CRT 15 on which the respective voltages fed from the vertical 11 and horizontal 13 deflection circuits are used for scanning the image thereon.
Based on the calculation values of the steps S1 to S5 figured out by a calculating unit not shown such as a computer, the waveform modulation circuits 12 and 14 serve to transform the scanning voltages used for deforming the image to be portrayed on the CRT to the vertical and horizontal directions.
The present invention thus configured has the following specific effects.

(1) Irrespective of the position of the projector, a distortion-free perfect image is obtained which is equivalent to the image derived from the projector at the center of the dome. It is therefore possible to project with a wider field angle an image whose filed angle had to be hitherto narrowed in order to lessen the distortion in view of the position of the projector, thereby ensuring a faithful reproduction of a realistic feeling which the image will inherently possess.
(2) The same reason as the above (1) also enables the projector to be disposed at the periphery of the domed surface, which will result in an increase of audience accommodated within the dome.
(3) Irrespective of the position of the projector, a distortion-free perfect image is obtained which is equivalent to the image derived from the projector at the center of the dome. It is therefore possible to provide continuously connected images allowing a plurality of projectors to project in cooperation a single image onto the screen, which has hitherto been impossible to perform in view of the positions of projectors.
(4) In spite of mounting of the projector on a frame having a movable shaft to vary the position of projection while projecting the dynamic images, distortion-free perfect images are obtained and hence a sufficient stage effect is achieved.
(5) The image to be projected is deformed by modulating the waveforms of the horizontal and vertical scanning voltages of the projector. It is therefore unnecessary for carrying out the invention to modify the hardware, and the modification of setting is required only within the scanning circuit which is the last step of the circuits involved in the projector.

Dissimilar to the case where the deformation is performed at the stage of projected image signals, the same deforming circuit will suffice irrespective of the standards of the projected image signals, thus achieving a simplified unit and hence projected image deformation at a lower cost.

While an illustrative and presently preferred embodiment of the present invention has been described in detail herein, it is to be understood that the inventive concepts may be otherwise variously embodied and employed and that the appended claims are intended to be construed to include such variations except insofar as limited by the prior art.

**Claims**

1. A method of projecting an image onto a surface of a dome by means of a projector located at a position other than the center of said dome inside said dome, said method comprising the steps of:

   assuming a projected image obtained when the same image is projected by said projector located at the center of said dome; and
   deforming said image to be projected so that a projected image obtained by use of said projector located at the position other than the center of said dome is coincident with said assumed projected image.

2. A method of projecting an image onto a surface of a dome according to claim 1, wherein

   said step of deforming said image to be projected includes modulating waveforms of horizontal and vertical scanning voltages of said projector.

# FIG. 1

Find positions ( xd , yd , zd ) to be projected on dome from focal length of imaging optical system, radius of dome, and coordinates of point on image.

～ S 1

Transform into coordinate system having origin corresponding to position at which projector is located.

～ S 2

Figure out angle of rotation so that coordinate system having origin corresponding to position at which projector is located is directed to center of projection image, and rotate coordinate system

～ S 3

Transform obtained coordinates into two-dimensional coordinates in focal length of projection optical system.

～ S 4

Figure out amount of variation ( percentage ) from obtained values.

～ S 5

Regulate horizontal and vertical scanning voltages of projector in accordance with amount of variation.

～ S 6

# FIG. 2

# FIG. 3

# FIG. 4

4A

4B

4C

Distance from
Center of
Projected Image

$X_{10}'$
$X_9'$
$X_8'$
$X_7'$
$X_6'$
$X_5'$
$X_4'$
$X_3'$
$X_2'$
$X_1'$

S

$X_0'$

Principal Point
of Imaging
Optical System

P

Image Forming
Plane

$X_0$
$X_1$
$X_2$
$X_3$
$X_4$
$X_5$
$X_6$
$X_7$
$X_8$
$X_9$
$X_{10}$ Objected
to be
Imaged

Angle from
Center of
Projected Image

# FIG. 5

# FIG. 6

**European Patent Office**

**EUROPEAN SEARCH REPORT**

Application Number

EP 97 30 1991

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 573 924 A (NORDBERG ANTHONY) 4 March 1986 | 1 | G03B37/00 |
| Y | * column 1, line 55 - column 2, line 16; figure 1 * <br> * column 4, line 37 - column 7, line 9 * <br> --- | 2 | |
| Y | PATENT ABSTRACTS OF JAPAN <br> vol. 015, no. 158 (P-1193), 19 April 1991 <br> & JP 03 027081 A  (MITSUBISHI PRECISION CO LTD), 5 February 1991, <br> * abstract * <br> ----- | 2 | |

|  | TECHNICAL FIELDS SEARCHED      (Int.Cl.6) |
|---|---|
|  | H04N <br> G03B <br> G09B |

The present search report has been drawn up for all claims

| Place of search | Date of completion of the search | Examiner |
|---|---|---|
| BERLIN | 5 August 1997 | Raeymaekers, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)